# EUROPÄISCHE PATENTANMELDUNG

(11) **EP 0 804 998 A1**
(43) Veröffentlichungstag der Anmeldung: **05.11.1997**
(21) Anmeldenummer: 97106074.4
(22) Anmeldetag: 14.04.1997
(51) Int. Cl.: B23Q 17/09, B23Q 5/22

(54) **Abbundanlage zum Bearbeiten von Werkstücken mit einer Fördervorrichtung**

(30) Priorität: 30.04.1996 DE 19617335
(71) Anmelder: Hundegger, Hans, D-87749 Hawangen (DE)
(72) Erfinder: Hundegger, Hans, D-87749 Hawangen (DE)
(74) Vertreter: Pfister, Helmut, Dipl.-Ing.

(57) **Zusammenfassung**

Es wird eine Abbundanlage zum Bearbeiten von Werkstücken vorgeschlagen, die eine Steuerung (1) aufweist und die Steuerung die Drehzahl eines Antriebsmotors (20) einer Bearbeitungsmaschine (2) überwacht und die Vorschubgeschwindigkeit der Fördervorrichtung (3) der Abbundanlage in Abhängigkeit von der Belastung bestimmt.

## Beschreibung

Die Erfindung betrifft eine Abbundanlage zum Bearbeiten von Werkstücken, insbesondere Bretter, Kanthölzer und dergleichen, wobei eine Fördervorrichtung mit einem Transportschlitten das Werkstück zu mindestens einer Bearbeitungsmaschine der Abbundanlage transportiert, wobei die Bearbeitungsmaschine einen Antriebsmotor aufweist und eine Steuerung die Bearbeitung des Werkstückes überwacht, und durch die Fördervorrichtung das Werkstück weiteren Bearbeitungen zuführt.

Eine solche Abbundanlage ist zum Beispiel in der DE-PS 34 20 080 bekannt geworden. In einer solchen Abbundanlage werden alle zimmermannsmäßigen Bearbeitungsschritte an einem Holzbalken oder dergleichen ausgeführt, die notwendig sind, um aus diesem Holzbalken einen Kehlsparren oder dergleichen für einen Dachstuhl zu fertigen. Diese Abbundanlagen zeichnen sich durch eine hohe Flexibilität und Wirtschaftlichkeit aus. Die Anlagen werden von einer Computersteuerung überwacht, wobei diese Computersteuerung aus vorgegebenen Längendaten, zum Beispiel aus einem CAD-Programm, ermittelt, welche Werkstücke zu welchen Dachstuhlelementen verarbeitet werden. Das Programm ist hierbei so optimiert, daß möglichst wenige Abschnitte entstehen, wodurch eine äußerst rationelle Fertigung möglich ist. Die Steuerung gibt hierbei die Bearbeitung des Werkstückes vor und überwacht diese.

Als Bearbeitungsmaschinen sind zum Beispiel Sägen, Kappsägen, Kettenfräser, Stirnfräser, Bohrer, Hobelmaschinen, Mehrseitenhobelmaschinen und dergleichen vorgesehen. Diese Bearbeitungsmaschinen führen Arbeiten sowohl in Längsrichtung des Balkens, also parallel zur Förderrichtung aus, als auch in einem Winkel hierzu oder quer aus.

Für den Transport des Werkstückes in der Abbundanlage ist eine Fördervorrichtung vorgesehen, an der ein Transportschlitten geführt ist. Dieser Transportschlitten ergreift das Werkstück und bewegt das Werkstück durch die Abbundanlage entlang der Förderrichtung zu den verschiedenen Bearbeitungsmaschinen.

Für den Antrieb der verschiedenen Bearbeitungsmaschinen ist ein Antriebsmotor vorgesehen, der zum Beispiel als Elektromotor ausgestaltet ist.

Die Bearbeitungsmaschinen sind beispielsweise stationär ausgebildet oder weisen eine Beweglichkeit quer zur Vorschubrichtung der Fördervorrichtung auf. Durch eine Überlagerung dieser Querbewegung mit der Förderbewegung der Fördervorrichtung ist es möglich beliebige Bearbeitungen an dem Werkstück auszuführen.

Hierzu ist eine Steuerung vorgesehen, die aufgrund der zum Beispiel aus einem CAD-Programm übergebenen Konstruktionsdaten die entsprechenden Bearbeitungsschritte auswählt und auch beispielsweise bei einer schräg verlaufenden Nut die entsprechende Überlagerung der beiden Vortriebsgeschwindigkeiten, einerseits der Fördervorrichtung, andererseits der Bearbeitungsmaschine, regelt.

Wenn die Bearbeitung an einer Bearbeitungsmaschine abgeschlossen ist, wird das Werkstück mit relativ hoher Geschwindigkeit in eine neue Position gebracht, damit der nächste Bearbeitungsschritt, zum Beispiel mit der gleichen oder auch einer anderen Bearbeitungsmaschine, durchgeführt werden kann. Es wird angestrebt, daß die Bearbeitungsdauer möglichst gering ist, da in einer Abbundanlage im Prinzip nur ein Werkstück auf einmal bearbeitet werden kann. Die Bearbeitungszeiten an den Bearbeitungsmaschinen bestimmen also in hohem Maße die Durchlaufzeit des Werkstückes durch die Abbundanlage. Aus diesem Grund wird angestrebt, die Bearbeitungsmaschinen mit hohen Geschwindigkeiten laufen zu lassen, also die Bearbeitungen mit hoher Geschwindigkeit an dem Werkstück auszuführen.

Auch die Verwendung von hochwertigen Schneid- und Hobelwerkzeugen schließt einen Verschleiß dieser Werkzeuge nicht aus, und es kann dazu führen, daß die verschlissenen und verbrauchten Werkzeuge das Werkstück ruinieren.

Die schnell laufenden, schlecht schneidenden Werkzeuge können die Bearbeitungsflächen regelrecht verbrennen. Neben einer Beschädigung des Werkstückes ist es auch möglich, daß das Werkzeug selber aufgrund der hohen Hitzeentwicklung einen nicht reparierbaren Schaden nimmt.

Das verschlissene Werkzeug muß dann gewechselt werden, wodurch eine unvermeidbare Standpause eintritt.

Die Erfindung hat es sich zur Aufgabe gemacht, Abbundanlagen wie eingangs beschrieben dahingehend zu verbessern, daß ein sicheres Bearbeiten der Werkstücke auch dann erfolgt, wenn die Werkzeuge relativ weit verschlissen sind, also nicht mehr gut schneiden.

Zur Lösung dieser Aufgabe geht die Erfindung aus von einer Abbundanlage wie eingangs beschrieben und schlägt vor, daß die Steuerung die Belastung des Antriebmotors überwacht und die Vorschubgeschwindigkeit der Fördervorrichtung in Abhängigkeit von der Belastung bestimmt.

Die hohe Bearbeitungsgeschwindigkeit der Bearbeitungsmaschinen führt dazu, daß diese Bearbeitungsmaschinen eine hohe Leistung erzielen, also große Bearbeitungsflächen pro Zeit bearbeiten. Um die Bearbeitungszeiten entsprechend zu reduzieren werden mit diesen Hochleistungsbearbeitungsmaschinen relativ hohe Vortriebgeschwindigkeiten gefahren. Ist nun das Werkzeug der Bearbeitungsmaschine verschlissen oder weist keine optimale Arbeitsleistung mehr auf so wird nun erfindungsgemäß vorgeschlagen die Vorschubgeschwindigkeit der Fördervorrichtung abzusenken, da sich die Last, bzw. Belastung des Antriebmotores aufgrund des erhöhten Widerstandes erhöht. Dadurch wird die Schnittleistung reduziert und zwar auf ein Maß, das mit der Qualität des Werkzeuges noch sicher gearbeitet werden kann, ohne ein Verbrennen oder Ausreißen der Bearbeitungsflächen, oder andere Beschädigungen zu erzielen.

Auf diese Weise kann auch mit einem nicht optimal wirkenden Werkzeug noch ein optimales Bearbeitungsergebnis erreicht werden, wobei zwar die Bearbeitungsgeschwindigkeit reduziert wird aber demgegenüber ein fehlerfrei bearbeitetes Werkstück erreicht wird und die notwendige Standzeit zum Umrüsten bei einer anderen Gelegenheit erfolgen kann. Das fehlerhafte Werkzeug führt somit nicht mehr zum Stillstand der ganzen Abbundanlage oder übermäßiger Produktion von Ausschuß.

Hierbei ist es günstig, wenn die Belastung des Antriebsmotors durch einen Drehzahlaufnehmer erfolgt, der die Drehzahl bestimmt. Als ein Antriebsmotor ist zum Beispiel ein Elektromotor vorgesehen. An dem Rotor des Elektromotores ist zum Beispiel ein entsprechender Sensor vorgesehen, der die Drahzahl mißt. Es kann zum Beispiel ein Magnetsensor sein oder eine Lichtschrankenanordnung. Die Drehzahl des Antriebsmotors ist ein direktes Maß für die Belastung des Werkzeuges. Durch die Bestimmung der Drehzahl wird somit auf die Vorschubgeschwindigkeit der Fördervorrichtung eingewirkt.

Insbesondere ist es günstig, wenn an der Steuerrung eine Eingabe für die Mindestdrehzahl des Antriebsmotors vorgesehen ist, und erst die Unterschreitung dieser Mindestdrehzahl zu einer Veränderung der Vorschubgeschwindigkeit führt. Durch eine solche Ausgestaltung wird ein gewisser Toleranzbereich geschaffen, wodurch ausgeschlossen wird, daß kleine Drehzahlabweichungen bereits zu einer Verlangsamung der Vorschubbewegung führt. Solche Schwankungen entstehen zum Beispiel aufgrund unterschiedlicher Holzdichten oder Holzqualitäten. Durch eine solche Ausgestaltung ist auch ein gewisser Verschleiß des Werkzeuges tolerierbar und führt nicht zu einer Veränderung der Bearbeitungsgeschwindigkeit.

Es ist günstig, wenn die Steuerung einen Mikroprozessor aufweist. Die Realisierung der Steuerung mit einem Mikroprozessor eröffnet die Möglichkeit, die Steuerung sehr komfortabel auszugestalten. Der Mikroprozessor, bzw. der Computer der Steuerung erhält die notwendigen Daten aus einem entsprechenden CAD-Programm und bestimmt aufgrund der Konstruktionsunterlagen die Lage von Bearbeitungen wie Löcher, Zapfen, Bohrungen, Ausfräsungen und dergleichen.

In einer bevorzugten Ausgestaltung der Erfindung ist vorgesehen, daß die Bearbeitungsmaschine einen Stell- bzw. Bearbeitungsantrieb aufweist. Dieser Antrieb ist hierbei günstigerweise auch mit der Steuerung verbunden und bewirkt ein Positionieren des Werkzeuges bezüglich einer Achse die quer ist zur Förderrichtung des Werkstückes. Dieser Antrieb wird auch für eine Bearbeitung verwendet, die im wesentlichen quer zur Förderrichtung ist. Hierbei ist weiterhin vorgesehen, daß die Bearbeitungsrichtung der Bearbeitungsmaschine mit der Förderrichtung der Fördervorrichtung einen Winkel von 0 - 90° aufweist.

In einer bevorzugten Ausgestaltung der Erfindung ist vorgesehen, daß für die Bearbeitung des Werkstückes die Steuerung eine Überlagerung des Vorschubes des Werkstückes durch die Fördervorrichtung und des Vorschubes der Bearbeitungsmaschine durch den Bearbeitungsantrieb vorsieht. Durch eine solche Ausgestaltung können an dem Werkstück schräg verlaufende Bearbeitungen ausgeführt werden.

Eine solche Ausgestaltung ist zum Beispiel bei Stirnfräsern oder Zapfenfräsern (dies sind kleine Kettensägen) von Vorteil, bei denen eine Verschlechterung der Schneid- oder Hobeleigenschaften aufgrund des Verschleißes des Werkzeuges zu einer Veränderung der Vorschubgeschwindigkeit führt. Hierbei sieht die Erfindung günstigerweise vor, daß die Steuerung auch die Vorschubgeschwindigkeit des Bearbeitungsantriebes entsprechend regelt.

Desweiteren ist vorgesehen, daß eine Eingabe für eine Wechseldrehzahl vorgesehen ist, und eine Unterschreitung dieser Wechseldrehzahl zu einem Anhalten der Fördervorrichtung führt.

Die Wechseldrehzahl ist eine untere Grenzdrehzahl, die bei gewissen Arbeitsprozessen erreicht wird, wenn das Werkzeug einen Abnutzungsgrad erreicht hat, der ein Wechseln des Werkzeuges (Wechseldrehzahl) unabdingbar macht. Ohne ein Ausschalten der Fördervorrichtung, würde das stumpfe Werkzeug einen nicht kontrollierbaren Schaden an dem Werkzeug erzeugen bzw. zu einer Zerstörung des Werkstückes aufgrund übermäßiger Hitze oder anderer Einflüsse führen oder gar den Antriebsmotor schädigen.

Die erfindungsgemäße Lösung ist nicht nur dann anzuwenden, wenn das Werkzeug aufgrund entsprechender Bearbeitungszeiten nicht mehr die optimale Qualität aufweist, sondern kann auch zu einer Erhöhung der Vorschubgeschwindigkeit führen wenn zum Beispiel der Widerstand bei der Bearbeitung aufgrund anderer Materialbeschaffenheit oder geringerer Bearbeitungsflächen reduziert wird. Durch eine solche Ausgestaltung wird eine flexible Anpassung der Vorschubgeschwindigkeit an die Leistungsfähigkeit der Bearbeitungsmaschine bewirkt und somit eine optimale Ausnutzung des Werkzeuges erreicht.

In der Zeichnung ist die Erfindung schematisch dargestellt. Es zeigen:
- Fig. 1: ein Blockschaltbild eines Drehzahlaufnehmers der erfindungsgemäßen Abbundanlage,
- Fig. 2: in einer Draufsicht die beispielhafte Ausgestaltung von Bearbeitungen der erfindungsgemäßen Abbundanlage.

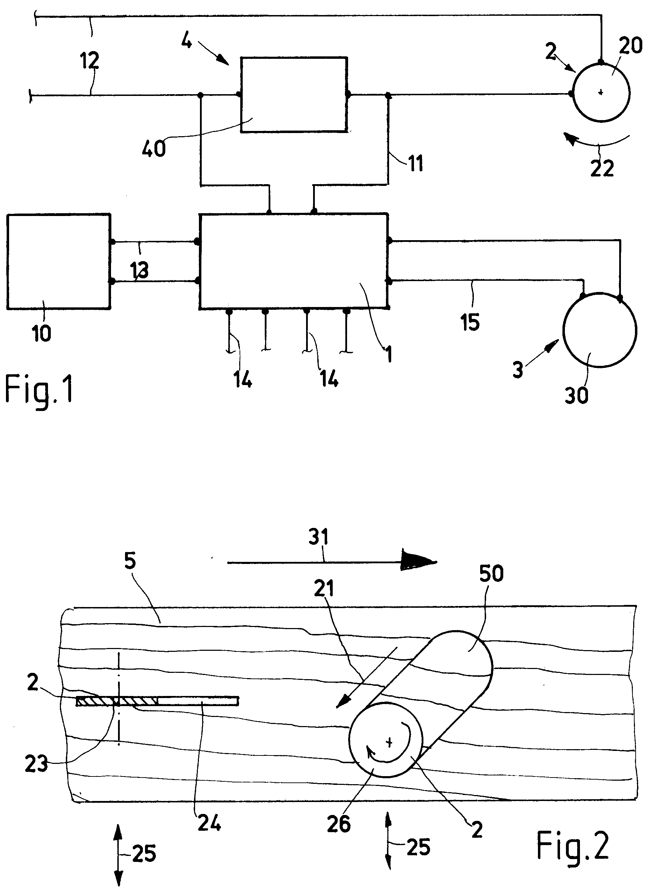

In Fig. 1 ist eine beispielhafte Schaltung für die Ausgestaltung eines Drehzahlaufnehmers 4 angegeben. Die Bearbeitungsmaschine 2 weist einen Antriebsmotor 20 auf. Dieser Antriebsmotor 20 setzt das Bearbeitungswerkzeug, das hier nicht gezeigt ist, in Rotation 22. Als Antriebsmotor 20 ist hierbei zum Beispiel ein Elektromotor vorgesehen. Dieser Elektromotor ist mit einer Stromversorgung 12 verbunden. Aufgrund des verschlissenen oder verbrauchten Werkzeuges ist die Schneidleistung des Werkzeuges reduziert. Daraus resultiert eine Überlast des Motors, wobei der Motor versucht, seine Nenndrehzahl durch Erhöhung der Stromaufnahme wieder zu erreichen. In der Leitung 12 ist zum Beispiel ein Widerstand 40 vorgesehen. Aufgrund der verringerten Drehzahl nimmt der Antriebsmotor 20 mehr Strom auf. Dies führt an dem Widerstand 40 zu einem erhöhten Spannungsabfall, was von der Steuerung 1 über die Leitung 11 aufgenommen wird.

An der Steuerung 1 schließen eine Vielzahl von Leitungen an. Über die Leitung 13 ist die Steuerung 1 mit einem Eingabefeld 10 verbunden. Über das Eingabefeld 10 können in die Steuerung 1 verschiedene Daten eingegeben werden. Zum Beispiel ist es möglich eine Mindestdrehzahl mit der Eingabe 10 einzugeben. Befindet sich die Drehzahl überhalb der Mindestdrehzahl, erfolgt keine Veränderung der Vorschubgeschwindigkeit. Auch kann mit Hilfe der Eingabe 10 die Wechseldrehzahl vorgegeben werden. An der Steuerung sind eine Vielzahl weiterer Leitungen 14 angeschlossen, durch die die Steuerung 1 mit weiteren Elementen, zum Beispiel Datenspeichern, Computer usw., verbunden ist.

Über die Leitung 15 ist die Steuerung 1 mit der Fördervorrichtung 3 verbunden. Insbesondere wirkt die Steuerung 1 auf den Antriebsmotor 30 der Fördervorrichtung 3 ein. Sinkt nun die von dem Drehzahlaufnehmer bzw. Lastaufnehmer 4 gemessene Drehzahl 22 unter die über das Eingabefeld 10 eingegebene Mindestdrehzahl ab, so wird der Antriebsmotor 30 über die Steuerleitung 15 derart beeinflußt, daß die Vorschubgeschwindigkeit des Werkstückes 5 reduziert wird.

Im umgekehrten Fall, also wenn die Drehzahl 22 zum Beispiel aufgrund anderer Werkstückeigenschaften ansteigt, sieht die Steuerung 1 vor, daß dann auch die Vorschubgeschwindigkeit der Fördervorrichtung 3 erhöht wird, also der Antriebsmotor 30 entsprechend schneller wird. Es kann hierbei eine direkte Proportionalität angenommen werden.

In Fig. 2 ist schematisch dargestellt, wie die Bearbeitungsmaschinen 2 auf ein Werkstück 5 einwirken. Als Werkstück 5 ist hierbei zum Beispiel ein Holzbalken vorgesehen. Mit der Kreissäge 23 wird hierbei ein Längsschnitt 24 in das Werkstück 5 eingebracht. Für die Positionierung der Kreissäge 23 ist ein Stellantrieb 25 vorgesehen. Dieser bewirkt bei dieser Ausgestaltung eine parallel zur Förderrichtung 31 wirkende Versetzung des Kreissägeblattes 23.

Desweiteren ist in Fig. 2 auf der rechten Seite ein Stirnfräser 26 angedeutet. Dieser Stirnfräser schneidet eine schräg verlaufende Nut 50 in das Werkstück 5. Diese Nut 50 kann nun auf zwei verschiedene Weisen eingebracht werden. Zum einen kann die Fördervorrichtung 3 angehalten werden und das Werkzeug 26 entlang des Pfeiles 21 durch den Bewegungsantrieb 25 schräg verschoben werden. Es ist aber auch möglich, einen ebenfalls zur Förderrichtung 31 rechtwinklig wirkenden Stellantrieb 25 für das Werkzeug 26 vorzusehen, um durch die Überlagerung der Förderbewegung mit der Bewegung des Stellantriebes die schräg verlaufende Nut zu erhalten.

Als Winkel zwischen der Förderrichtung und der Bearbeitungsrichtung ist hierbei nicht eine vektorielle Betrachtungsweise anzustellen, sondern eine Betrachungsweise, die unabhängig von einer Vorwärts- oder Rückwärtsbewegung ausgeht.

Wird der Stellantrieb 25 nun zum Beispiel in einen, vom rechten Winkel gegenüber der Förderrichtung 31 abweichenden Winkel angeordnet, so bedeutet das für die Steuerung nur eine Korrektur um einen trigonometrischen Faktor, der von diesem Winkel abhängt.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Abbundanlage zum Bearbeiten von Werkstücken, insbesondere Brettern, Kanthölzern und dergleichen, wobei eine Fördervorrichtung mit einem Transportschlitten das Werkstück zu mindestens einer Bearbeitungsmaschine der Abbundanlage transportiert, wobei die Bearbeitungsmaschine einen Antriebsmotor aufweist, und eine Steuerung die Bearbeitung des Werkstückes überwacht, und durch die Fördervorrichtung das Werkstück weiteren Bearbeitungen zuführt, **dadurch gekennzeichnet, daß** die Steuerung (1) die Belastung des Antriebsmotors (20) überwacht und die Vorschubgeschwindigkeit der Fördervorrichtung (3) in Abhängigkeit von der Belastung bestimmt.

2. Abbundanlage nach Anspruch 1, **dadurch gekennzeichnet, daß** die Belastung über die Stromaufnahme des Antriebsmotors (20) bestimmbar ist.

3. Abbundanlage nach einem oder beiden der vorhergehenden Ansprüche, **dadurch gekennzeichnet, daß** die Belastung des Antriebmotors durch einen Drehzahlaufnehmer (4) erfolgt, der die Drehzahl (22) bestimmt.

4. Abbundanlage nach einem oder mehreren der vorhergehenden Ansprüche, **dadurch gekennzeichnet, daß** an der Steuerung (1) eine Eingabe (10) für die Mindestdrehzahl des Antriebsmotors (20) vorgesehen ist, und erst die Unterschreitung dieser Mindestdrehzahl zu einer Veränderung der Vorschubgeschwindigkeit der Fördervorrichtung (3) führt.

5. Abbundanlage nach einem oder mehreren der vorhergehenden Ansprüche, **dadurch gekennzeichnet, daß** die Steuerung (1) einen Mikroprozessor aufweist.

6. Abbundanlage nach einem oder mehreren der vorhergehenden Ansprüche, **dadurch gekennzeichnet, daß** die Bearbeitungsmaschine (2) einen Stell- bzw. Bearbeitungsantrieb (25) aufweist.

7. Abbundanlage nach einem oder mehreren der vorhergehenden Ansprüche, **dadurch gekennzeichnet, daß** die Bearbeitungsrichtung der Bearbeitungsmaschine (2) mit der Förderrichtung (31) der Fördervorrichtung (3) einen Winkel von 0 - 90° einschließt.

8. Abbundanlage nach einem oder mehreren der vorhergehenden Ansprüche, **dadurch gekennzeichnet, daß** für die Bearbeitung des Werkstückes (5) die Steuerung (1) eine Überlagerung des Vorschubes des Werkstückes (5) durch die Fördervorrichtung (3) und der Bearbeitungsmaschine (2) durch den Bearbeitungsantrieb (25) vorsieht.

9. Abbundanlage nach einem oder mehreren der vorhergehenden Ansprüche, **dadurch gekennzeichnet, daß** eine Eingabe (10) für eine Wechseldrehzahl vorgesehen ist, und die Unterschreitung dieser Wechseldrehzahl zu einem Anhalten der Fördervorrichtung (3) führt.

10. Abbundanlage nach einem oder mehreren der vorhergehenden Ansprüche, **dadurch gekennzeichnet, daß** die Steuerung (1) die Vorschubgeschwindigkeit der Bearbeitungsmaschine (2) beeinflußt.
